Europäisches Patentamt

**European Patent Office**

**Office européen des brevets**

(11) Numéro de publication: **0 277 482 B1**

## FASCICULE DE BREVET EUROPEEN

(45) Date de publication de fascicule du brevet: **17.06.92**

(21) Numéro de dépôt: **88100139.0**

(22) Date de dépôt: **08.01.88**

(51) Int. Cl.5: **A01K 61/00,** A23K 1/18,
C02F 3/32

(54) **Procédé de production de crustacés planctoniques et son application.**

(30) Priorité: **15.01.87 LU 86735**

(43) Date de publication de la demande:
**10.08.88 Bulletin 88/32**

(45) Mention de la délivrance du brevet:
**17.06.92 Bulletin 92/25**

(84) Etats contractants désignés:
**AT BE CH DE ES FR GB GR IT LI NL SE**

(56) Documents cités:
**DE-A- 3 520 797**
**US-A- 4 593 647**

(73) Titulaire: **LIBZIGA ENGINEERING LTD.**
**223 Regent Street**
**London W1 R7DB(GB)**

(72) Inventeur: **Metz, Jean-Paul**
**7 rue Bertholet**
**L-1233 Luxembourg(LU)**

(74) Mandataire: **Freylinger, Ernest T.**
**Office de Brevets Ernest T. Freylinger 321,**
**route d'Arlon Boîte Postale 48**
**L-8001 Strassen(LU)**

Rank Xerox (UK) Business Services

## Description

### Objet de l'invention

La présente invention vise essentiellement la production de crustacés planctoniques de trande valeur nutritive et ceci de préférence à partir de déchets et d'eaux résiduaires d'origine domestique et/ou industrielle.

On sait en effet que de nombreuses espèces de poissons et de crustacés n'acceptent que difficilement des aliments séchés et d'autre compositions alimentaires. De plus, si certaines espèces acceptent de tels aliments, on observe une mortalité élevée due à la perturbation des habitudes entraînant une absence d'appétence de ceux-ci pour l'animal et à des déficiences alimentaires.

Il existe donc un besoin pour des aliments provenant de manière pratiquement totale de ce qui constitue l'alimentation naturelle des différentes espèces animales.

L'invention porte donc également sur le traitement des produits obtenus par le procédé de l'invention pour leur conservation en vue de leur utilisation comme aliment pour animaux d'élevage et/ou matière première industrielle.

Le procédé de l'invention peut être mis en oeuvre notamment dans les étangs de lagunage en aval de stations d'épuration, ballastières et étangs à proximité d'industries agro-alimentaires ou élevages industriels, lacs et étangs eutrophisés.

Par suite de l'épuration de l'eau consécutive à l'action filtrante des crustacés, le procédé de l'invention offre donc à la fois une solution élégante à la production d'une matière alimentaire utile tout en permettant une épuration efficace des eaux. La plus-value résultant de la vente du produit alimentaire obtenu permet donc d'épurer à moindre coût les eaux qui actuellement sont souvent rejetées telles quelles, faute de moyens financiers appropriés.

### Éléments caractéristiques de l'invention

Bien que l'intérêt du plancton en tant que matière alimentaire, en particulier pour les poissons, soit connu depuis longtemps, aucun procédé industriel n'a encore connu de succès jusqu'à présent.

Ceci résulte vraisemblablement du fait que le développpment de crustacés planctoniques n'était pas suffisant pour assurer la rentabilité du procédé.

Le Demandeur a observé qu'il importe que les populations des crustacés, d'algues et de bactéries soient maintenues dans un stade de reproduction et de croissance dynamiques et que les crustacés produits soient récoltés en batch ou en continu par des machines filtrantes. Le niveau de capture et les tailles récoltées sont adaptés au stade de développement des populations planctoniques, dans le but d'optimiser la production.

Un élément essentiel pour réaliser ces conditions est que les substances organiques en solution ou en suspension assimilables par les crustacés planctoniques soient adsorbées en tout ou en partie sur des particules minérales provenant de phytoplancton fossilisé. Il s'agit en particulier de roches fossiles du type craie coccolithique existant notamment dans les carrières.

Il est bien entendu préférable de sélectionner par des techniques classiques des souches de crustacés très résistantes à la pollution, de croissance rapide, de taille finale élevée afin d'en faciliter la récolte. Ces crustacés, en filtrant et en digérant les bactéries, les algues unicellulaires et les particules organiques inertes, améliorent fortement la qualité de l'eau.

Parmi les résidus industriels assimilés par ces crustacés, citons les suivantes : sang et sérum, levures, lisier de porcherie et de volailles, son de riz et de céréales, farines, lait et petit-lait, effluents organiques de sucreries, d'abattoirs, de laiteries, de brasseries, égouts domestiques. Certains de ces déchets sont directement filtrés, d'autres sont utilisés par des bactéries, des levures, des algues qui sont à leur tour ingérées par les crustacés. Les substances organiques en solution sont filtrées après adsorption sur des particules de roches fossiles précitées.

Il convient de noter que des plans d'eau qui contiennent de tels effluents ne permettent généralement pas la survie du poisson et que de ce fait le plancton obtenu est exempt d'agents pathogènes et de parasites pour les poissons.

La technique utilisée consiste donc essentiellement à cultiver des crustacés planctoniques dans des milieux nutritifs du type mentionné en présence de roches fossiles et de récolter le plancton et continu ou en discontinu par filtration, le niveau de capture et les tailles recoltées étant adaptés au stade de développement des populations planctoniques.

Avantageusement le produit récolté est conservé suivant différentes techniques, en fonction de la demande des différents marchés :

Parmi ces techniques, on peut citer :

a) la congélation : le zooplancton congelé est utilisé pour le nourrissage des larves et alevins de poissons et de crustacés dans les fermes aquacoles d'eau douce (truite, saumon, ombre, huchon, black bass, brochet, esturgeon, poissons d'ornement et d'aquarium, écrevisses, chevrette) et d'eau de mer (bar, daurade, sole, turbot, coryphène, pompano, homard, crevettes).Le zooplancton est accepté par toutes les espèces élevées dont il constitue la nourriture naturelle. Sa composition biochimique s'harmonise parfaitement avec les enzymes digestives de ces espèces, donnant ainsi des performances de croissance et de survie très largement supérieurs à celles réalisées avec les aliments artificiels.

b) l'osmo-conservation : le zooplancton osmo-conservé sous forme de purée semi-liquide se conserve à la température ambiante, ce qui facilite sa vente dans les magasins d'aquariophilie et son emploi par les pisciculteurs. L'addition du zooplancton osmo-conservé aux aliments composés peut être envisagée.

L'osmo-conservation s'effectue par l'addition de chlorure de sodium et d'agents anti-oxydants tels que l'acide ascorbique. Une teneur en chlorure de sodium de 15 à 20% est suffisante pour stabiliser le zooplancton et pour le protéger contre les processus de dégradation bactérienne et/ou biochimique.

c) la dessication : le zooplancton récolté est stabilisé et protégé par l'ajout de 25 à 33% d'alcool (méthanol, éthanol, isopropanol, etc.), de la même proportion d'acétone ou de 3 à 4% de formaldéhyde. La purée liquide ainsi obtenue peut être stockée pendant des périodes prolongées. Le séchage s'effectue après tamisage et/ou centrifugage, sous vide ou à pression atmosphérique, avec ou sans récupération des solvants organiques ajoutés. La température du séchage ne dépasse pas 60 dégrés C. La dessiccation peut également être effectuée à partir du plancton frais, sans ajout préalablée de solvants ou agents conservateurs. Cependant la qualité du produit sec est améliorée dans des proportions appréciables par l'ajout de solvants. Un produit de structure très spéciale, dans lequel les organismes planctoniques restent isolés et reconnaissables, peut être obtenu par extraction des matières grasses au moyen d'alcools et/ou d'acétone.

Le zooplancton séchée est un additif de très grande valeur pour les aliments composés destinés aux salmonidés et autres poissons d'élevage. Sa teneur en caroténoides naturels, et notamment en astaxanthine, rend possible la pigmentation (saumonisation) des truites et saumons, alors que l'usage de la canthaxanthine synthétique est interdit dans la plupart des pays. Le zooplancton sec contient environ 70% de protéines facilement digestibles par les poissons d'eau douce et de mer.

d) l'ensilage : l'addition de 5 ml d'acide sulfurique concentré et de 20 g de pyrosulfite de potassium par kg de zooplancton frais donne un produit liquide qui contient environ 6% de protéine brute. Ce liquide est stable à température ambiante et se prête très bien à la confection d'aliments composés secs ou humides .

Les marchés les plus intéressant actuellement, sont ceux qui paient le prix le plus élevé par kg de poids humide, donc eux qui achètent le produit congelé et le produit osmo-conservé (aquaculture et aquariophilie).

En cas de production importante de zooplancton (production dépassant le niveau de 1.000 tonnes/an), le marché des aliments composés pour engraissement de poissons est également intéressant. Le zooplancton se substitue sans problème à la farine de poisson, tout en donnant une meilleure croissance et un état sanitaire amélioré. Son potentiel pour l'alimentation des volailles et du bétail mérite d'être exploré.

À titre d'illustration d'une forme d'exécution de la technique de l'invention, celle-ci sera décrie à l'aide de l'exemple suivant.

**Exemple**

Une production de 80.000 à 100.000 kg par an est assurée dans un étang de 150.000 m$^3$ alimenté par les rejets partiellement épurés d'une agglomération de 15.000 habitants (chiffres en poids humide de crustacés égouttés). Les eaux usées sont traités par sédimentation avant leur entrée dans l'étang. Un système d'aération du type agitateurs de surface est mis en route en case de teneur en oxygène inférieure à 5 mg/l. L'étang, ensemencé en organismes du phytoplancton et du zooplancton sélectionnés en vue d'un rendement optimal, est muni de systèmes de capture stationnaires et mobiles qui permettent de moduler le pourcentage de récolte journalière en fonction de la production planctonique, de l'apport en nutrients, etc. Le zooplancton récolté est soit congelé, soit conservé par osmo-conservation, soit encore conservé aux solvants organiques en vue d'un séchage ultérier. Pour des raisons pratiques seulement 20 à 25% du potentiel de cet étang ont été utilisé. Ceci correspond à un potentiel de production annuelle de 2 à 3 kg de zooplancton frais par m$^3$ de volume d'étang, soit de 20 à 30 kg par équivalent-habitant par an.

La production actuelle d'environ 300 kg par jour est récoltée et conservée par un seul collaborateur. La nourriture du zooplancton, important facteur de coût dans toutes les cultures de ce produit, est fournie gratuitement par les rejets organiques. Les installations et infrastructures nécessaires à la récolte et à la conservation représentent un investissement très faible.

Les essais en laboratoire du Demandeur prouvent que l'adjonction de phytoplancton fossilisé aux eaux usées que entrent dans l'étang permettent d'obtenir une augmentation considérable de la production. Ces roches fossiles, du type, "craie coccolithique", se distinguent par une structure microscopique très particulière qui réflète le squelette des algues du phytoplancton. Un film bactérien se forme sur ces structures peu de temps après leur entrée en contact avec l'eau riche en matière organique. Les matières organiques sont adsorbées par les structures fossiles. L'ensemble particule fossilematières organiques adsorbées-bactéries est ingéré par les crustacés du zooplancton dont l'activité filtrante est bien documentée.

L'addition de ces particules minérales constitue donc une importante amélioration du système de production de crustacés planctoniques en ce sens qu'elle ajoute une nouvelle source de nourriture indirecte pour les populations zooplanctoniques et permet une meilleure croissance du phytoplancton par une minéralisation accélérée des composés organiques contenus dans les rejets d'eau polluée. Les nitrates et phosphates ainsi que le dioxyde de carbone, nutrients essentiels pour le phytoplancton, sont remis en circulation plus rapidement que dans le système de lagunage classique. La formation de vase dans le fond des étangs est de ce fait considérablement diminuée et l'effet d'épuration par $m^3$ de volume utile est augmenté dans de proportions considérables. La quantité de fossiles à ajouter dépend de la composition des eaux usées devant être traitées, du volume de celles-ci et du volume de l'étang ainsi que de facteurs physiques et chimiques tels que la température, le pH, le dégré hydrotimétrique, etc. Un dosage de 2 à 6 g par $m^3$ de volume utile par jour est suffisant dans la plupart des cas.

## Revendications

1. Procédé de production de crustacés planctoniques dans lesquels les populations de crustacés, d'algues et de bactéries sont maintenues dans un stade de reproduction et de croissance dynamiques et les crustacés produits sont récoltés en batch ou en continu par des machines filtrantes, le niveau de capture et les tailles récoltées étant adaptés au stade de développement des populations de crustacés planctoniques, caractérisé en ce que les substances organiques en solution ou en suspension, assimilables par les crustacés planctoniques sont adsorbées en tout ou en partie sur des particules minérales provenant de phytoplancton fossilisé.

2. Procédé selon la revendication 1, caractérisé en ce que les particules minérales sont des particules de craie coccolithique.

3. Procédé selon l'une quelconque des revendications précédentes, caractérisé en ce qu'on sélectionne par des techniques classiques des souches de crustacés très résistantes à la pollution, de croissance rapide, de taille finale élevée afin d'en faciliter la récolte.

4. Procédé selon l'une des revendications précédentes, caractérisé en ce que la production du plancton est effectuée dans un milieu aqueux contenant des résidus industriels assimilés directement ou indirectement par les crustacés, notamment : sang et sérum, levures, lisier de porcherie et de volailles, son de riz et de céréales, farines, lait et petit-lait, effluents organiques de sucreries, d'abattoirs, de laiteries, de brasseries, égouts domestiques.

5. Procédé selon l'une quelconque des revendications précédentes, caractérisé en ce que le produit récolté est conservé suivant une des techniques, choisie parmi les suivantes :
   a) la congélation : en vue notamment du nourrissage des larves et alevins de poissons et de crustacés dans les fermes aquacoles d'eau douce (truite, saumon, ombre, huchon, black bass, brochet, esturgeon, poissons d'ornement et d'aquarium, écrevisses, chevrette) et d'eau de mer (bar, daurade, sole, turbot, coryphène, pompano, homard, crevettes).
   b) l'osmo-conservation : sous forme de purée semi-liquide conservable à la température ambiante, en vue notamment de la vente dans les magasins d'aquariophilie et son emploi par les pisciculteurs.
   c) la dessiccation : en vue notamment de constituer un additif pour les aliments composés destinés aux salmonidés.
   d) l'ensilage : sous forme d'un produit liquide se prêtant à la production d'aliments secs ou humides.

6. Utilisation du procédé selon l'une quelconque des revendications 1 à 5 pour l'épuration d'eaux résiduaires ou polluées d'origine urbaine, domestique, agricole ou industrielle.

## Claims

1. Process for the production of planktonic shellfish in which shellfish (sic) the populations of shellfish, algae and bacteria are maintained in a reproductive and dynamic growth stage and the shellfish produced are harvested in batches or continuously by filtering machines, the level of catch and the sizes harvested being adapted to the stage of development of the planktonic shellfish populations, characterized in that the dissolved or suspended organic substances which can be assimilated by the planktonic shellfish are entirely or partially adsorbed onto mineral particles.

2. Process according to Claim 1, characterized in that mineral particles are particles of coccolithic chalk.

3. Process according to any one of the preceding claims, characterized in that shellfish strains which are very resistant to pollution, which are quick-growing and which have a large final size so as to facilitate their harvest, are selected by conventional techniques.

4. Process according to one of the preceding claims, characterized in that the plankton production is carried out in an aqueous medium containing industrial residues directly or indirectly assimilated by shellfish, especially blood and serum, yeasts, pig and poultry slurry, rice and cereal bran, flours, milk and whey, organic effluents from sugar refineries, slaughter houses, dairy farms, breweries and domestic sewers.

5. Process according to any one of the preceding claims, characterized in that the product harvested is stored according to one of the techniques chosen from amongst the following:
   a) freezing: especially with a view to feeding larvae and fly of fish and of shellfish in fresh water (trout, salmon, grayling, hucho, black bass, pike, sturgeon, ornamental and aquarium fish, crayfish and shrimp) and sea water (bass, sea bream, sole, turbot, coryphene, pompano, lobster and prawns) aquacultural farms.
   b) osmo-storage: in the form of a semi-liquid purée which can be stored at ambient temperature, especially with a view to selling in shops selling materials for breeding fish for aquariums and its use by fish farmers.
   c) desiccation: especially with a view to forming an additive for compound foods intended for salmonids.
   d) ensiling: in the form of a liquid product which lends itself to the production of dry or moist foods.

6. Use of the process according to any one of Claims 1 to 5 for purifying waste or polluted waters of urban, domestic, agricultural or industrial origin.

**Patentansprüche**

1. Verfahren zur Erzeugung von Plankton-Krustentieren, bei dem die Krustentiere-, Algen- und Bakterienpopulationen in einem Stadium der dynamischen Reproduktion und des dynamischen Wachstums gehalten werden, und die erzeugten Krustentiere mit Hilfe von Filtermaschinen chargenweise oder kontinuierlich gewonnen werden, wobei das Gewinnungsniveau und die gewonnenen Größen an das Entwicklungsstadium der Populationen von Plankton-Krustentieren angepaßt werden, **dadurch gekennzeichnet, daß** die gelösten oder suspendierten organischen Substanzen, die von den Plankton-Krustentieren assimiliert werden können, auf mineralischen Partikeln, die von versteinertem Phytoplankton herrühren, ganz oder teilweise adsorbiert werden.

2. Verfahren gemäß Anspruch 1, **dadurch gekennzeichnet, daß** die mineralischen Partikel aus Kokkolithkreide bestehen.

3. Verfahren gemäß irgendeinem der vorhergehenden Ansprüche, **dadurch gekennzeichnet, daß** nach herkömmlichen Verfahren Krustentiere-Stämme ausgewählt werden, die sehr widerstandsfähig gegenüber Verschmutzung sind und ein rasches Wachstum aufweisen, und außerdem eine große Endgröße erreichen, so daß die Gewinnung der Krustentiere erleichtert wird.

4. Verfahren gemäß irgendeinem der vorhergehenden Ansprüche, **dadurch gekennzeichnet, daß** die Erzeugung des Planktons in einem wässerigen Medium erfolgt, das industrielle Abfälle enthält, die von den Krustentieren direkt oder indirekt assimiliert werden, und zwar insbesondere : Blut und Serum, Hefen, Schweine- und Geflügelgülle, Reis- und Getreidekleie, Mehle, Milch und Molke, organische Abwässer von Zuckerfabriken, Schlachthöfen, Molkereien, Brauereien, und Haushaltsabwässer.

5. Verfahren gemäß irgendeinem der vorhergehenden Ansprüche, **dadurch gekennzeichnet, daß** das gewonnene Erzeugnis nach einer der folgenden Techniken konserviert wird :
   a) Einfrierung : Insbesondere für die Fütterung der Larven und Setzlinge von Fischen und Krustentieren in den Süßwasser-Farmen (Forelle, Lachs, Äsche, Huchen, Schwarzbarsch, Hecht, Stör, Zier- und Aquariumfische, Krebse, Garnele) und in den Meerwasser-Farmen (Barsch, Brassen, Seezunge, Steinbutt, Goldmakrele, Pompano, Hummer, Garnelen).

b) Osmokonservierung : In Form von halbflüssigem Brei, der bei Raumtemperatur aufbewahrt werden kann, insbesondere zum Verkauf in Aquarien-Geschäften und zur Verwendung durch die Fischzüchter.

c) Eintrocknung : Insbesondere als Zusatz für Futtergemische, die für Salmoniden bestimmt sind.

d) Silo-Aufbewahrung : In Form eines flüssigen Erzeugnisses, das sich für die Herstellung von trockenen oder nassen Futtermitteln eignet.

6. Verwendung des Verfahrens gemäß irgendeinem der Ansprüche 1 bis 5 zum Reinigen von Abwasser oder Schmutzwasser aus der Stadt, den Haushalten, der Landwirtschaft oder der Industrie.